# FASCICULE DE BREVET EUROPEEN

(11) **EP 3 821 059 B1**
(45) Date de publication et mention de la délivrance du brevet: **14.01.2026**
(21) Numéro de dépôt: 19741984.9
(22) Date de dépôt: 08.07.2019
(51) Int. Cl.: C25B 1/044, C25B 9/13, C25B 9/70, C25B 9/75, C25B 11/036, C25B 15/08

(54) **SYSTÈME ET MÉTHODE POUR GÉNÉRER DE L'HYDROGÈNE**
SYSTEM UND VERFAHREN ZUR ERZEUGUNG VON WASSERSTOFF
SYSTEM AND METHOD FOR GENERATING HYDROGEN

(30) Priorité: 09.07.2018 BE 201805480
(43) Date de publication de la demande: 19.05.2021
(73) Titulaire: AGRO, Angelo, 1070 Anderlecht (Bruxelles) (BE)
(72) Inventeur: AGRO, Angelo, 1070 Anderlecht (Bruxelles) (BE)
(74) Mandataire: Arnold & Siedsma
(86) Numéro de dépôt international: PCT/EP2019/068258
(87) Numéro de publication internationale: WO 2020/011713

(56) Documents cités:
- GB-A- 365 983
- US-A- 3 975 247
- US-A- 5 292 405
- US-A1- 2009 166 191
- US-A1- 2013 140 171

## Description

### Domaine technique

La présente invention concerne un système et une méthode pour générer de l'hydrogène à destination d'un dispositif à combustion, plus particulièrement en générant de l'hydrogène par électrolyse d'eau. La présente invention concerne aussi un véhicule incluant ledit système.

### Art antérieur

Le document CA2708139A1 décrit un dispositif pour générer de l'hydrogène par électrolyse d'eau. Ce dispositif comprend une série de plaques verticales parallèles les unes aux autres. Les plaques délimitent des cellules étanches. L'électrolyse de l'eau peut se produire dans chacune de ces cellules.

Lors de l'électrolyse, l'eau se transforme en hydrogène gazeux et oxygène gazeux. Ces gaz étant plus légers que l'eau liquide, ils se placent préférentiellement dans le haut des cellules (comme indiqué à la page 7 de ce document), alors que l'eau se place préférentiellement dans le bas des cellules, alors que la réaction d'électrolyse continue. L'électrolyse se produit alors surtout dans le bas des cellules, ce qui fait que la production d'hydrogène diminue avec le temps. En outre, le dispositif doit être surdimensionné pour permettre une production qui reste à un taux suffisant, même avec cette diminution au cours du temps.

Le document US5292405 divulgue une cellule d'électrolyse.

Le document US2009/166191 A1 divulgue un appareil pour générer un gaz par électrolyse.

Le document US3975247 décrit un système de traitement des eaux usées et de récupération de l'eau et des solides utilisables.

Le document GB365983 décrit un appareil de revivification électrolytique de ferrocyanure de potassium forme lors de l'épuration des gaz par oxydation de l'hydrogène sulfure avec du ferricyanure de potassium.

### Résumé de l'invention

Un des buts de l'invention est de fournir un dispositif pour générer de l'hydrogène par électrolyse d'eau avec un taux moins fluctuant, et qui soit particulièrement compact et léger. A cet effet, l'invention propose un système selon la revendication 1.

Le dispositif selon l'invention permet de générer de l'hydrogène. L'hydrogène est ensuite utilisé dans le véhicule comme agent d'amélioration de la combustion afin d'améliorer considérablement le rendement de combustion d'un combustible hydrocarbone. Dans le dispositif selon l'invention, le fluide est forcé de passer d'un compartiment à l'autre entre l'entrée et la sortie de l'enceinte. Pour passer d'un compartiment au compartiment adjacent, il doit passer en alternance par une ouverture « en haut » des plaques et par une ouverture « en bas » des plaques. Ainsi, il doit effectuer un mouvement vertical à l'intérieur des compartiments, ce qui empêche une ségrégation à l'intérieur des compartiments entre liquide et gaz. Par conséquent, toute la surface des plaques entre l'ouverture inférieure et l'ouverture supérieure d'un compartiment est utilisée pour réaliser l'électrolyse. Cela permet d'obtenir un taux de production d'hydrogène qui soit plus stable que pour les dispositifs connus.

Le dispositif selon l'invention est agencé de façon à forcer le fluide à avoir des mouvements selon la deuxième direction : dans un compartiment, le fluide se déplace vers le haut, et dans le compartiment suivant, il se déplace vers le bas. En d'autres termes, une plaque ne comprend pas à la fois des ouvertures inférieure et supérieures. Ainsi, le dispositif selon l'invention se distingue clairement du dispositif décrit dans le document US2009/166191 A1 dans lequel les plaques comprennent à la fois des ouvertures inferieures et supérieures.

Les seules ouvertures entre les compartiments sont les ouvertures inférieures ou supérieures. Un compartiment est, de préférence, délimité d'un premier côté par une paroi ou plaque ayant uniquement une ou plusieurs ouverture(s) inférieure(s) et d'un deuxième côté, opposé au premier côté selon la première direction, par une paroi ou plaque ayant uniquement une ou plusieurs ouverture(s) supérieure(s). Chaque ouverture comprend au moins un trou, par exemple une fente.

Le dispositif selon l'invention permet de que l'ensemble de l'hydrogène produit soit directement exploité car le dispositif est portable. Cela évite donc de stocker ce gaz particulièrement explosif.

Les plaques sont préférentiellement distantes d'une distance d'un ou deux mm. Les plaques sont préférentiellement rigides. Néanmoins, elles pourraient être flexibles tout en restant dans le cadre de la présente invention. Les plaques sont préférentiellement planes. Néanmoins, elles pourraient être courbes tout en restant dans le cadre de la présente invention. Les plaques sont préférentiellement essentiellement parallèles.

Le fluide passant par l'entrée est une solution électrolytique aqueuse. Cela peut être par exemple de l'eau au moins partiellement déminéralisée, de l'eau de pluie, ou une solution aqueuse de NaOH.

Le dispositif est agencé pour que les anodes puissent être connectées à un potentiel électrique positif et les cathodes puissent être connectées à un potentiel électrique négatif.

Dans le cadre du présent document, l' « hydrogène » est la molécule de dihydrogène. Dans le cadre du présent document, l' « oxygène » est la molécule de dioxygène.

L'entrée comprend de préférence une ouverture dans l'enceinte. La sortie comprend de préférence une ouverture dans l'enceinte.

L'enceinte peut être en poly méthacrylate de méthyle, par exemple en plexiglas.

Dans un mode de réalisation de l'invention, les ouvertures inférieures et les ouvertures supérieures comprennent des trous traversant les plaques intermédiaires.

Dans un mode de réalisation de l'invention, les ouvertures inférieures et les ouvertures supérieures comprennent un trou traversant la première plaque d'extrémité et un trou traversant la deuxième plaque d'extrémité.

Selon l'invention, la première plaque d'extrémité est agencée pour former l'anode et la deuxième plaque d'extrémité est agencée pour former la cathode . Elles sont connectées à un dispositif d'alimentation électrique. Certaines des plaques intermédiaires sont agencées pour être à un potentiel électrique flottant.

En d'autres termes, certaines des plaques intermédiaires ne sont pas reliées par un conducteur solide à un potentiel extérieur.

Dans un mode de réalisation de l'invention, les ouvertures inférieures et les ouvertures supérieures sont des fentes. L'inventeur a effectué des tests et observé que des fentes permettent un meilleur rendement qu'une série de trous. En effet, à surfaces d'ouverture égales, les effets de frottements sont réduits pour une fente par rapport à des trous.

De préférence, les fentes s'étendent selon une troisième direction perpendiculaires aux première et deuxième directions.

De préférence, chacune des plaques ne comprend qu'une seule fente. Cela permet de maximiser la longueur du contact entre le fluide est les plaques.

De préférence, les fentes font de préférence entre 70% et 95% de la largeur d'une plaque. La largeur de la plaque est son étendue selon la troisième direction.

Dans un mode de réalisation de l'invention, au moins deux plaques adjacentes sont dans un même matériau. Cela simplifie la fabrication du dispositif et réduit son coût.

Dans un mode de réalisation de l'invention, les plaques sont métalliques.

Dans un mode de réalisation de l'invention, les plaques sont en acier inoxydable, et/ou en platine, et/ou en or.

Dans un mode de réalisation de l'invention, deux plaques consécutives sont maintenues écartées par un joint ou une entretoise. Le joint ou l'entretoise est par exemple en silicone ou en caoutchouc.

Selon l'invention, le système comprend en outre :
- une pompe agencée pour faire circuler un fluide entre l'entrée et la sortie, et
- un dispositif d'alimentation en électricité connecté aux anodes et aux cathodes.

Le dispositif d'alimentation en électricité permet en outre, de préférence, d'alimenter la pompe.

Dans un mode de réalisation de l'invention, le système comprend une pluralité de dispositifs pour générer de l'hydrogène selon l'invention, disposés de façon consécutive. La sortie du premier dispositif selon l'invention est connectée fluidiquement à l'entrée du deuxième dispositif et ainsi de suite.

Selon l'invention, le système comprend en outre un dispositif à combustion et un moyen de communication fluidique connectant la sortie à une entrée du dispositif à combustion.

Dans le cadre du présent document, un dispositif à combustion peut être tout dispositif dans lequel se produit une combustion, de préférence une combustion d'un combustible fossile. C'est par exemple un moteur à combustion ou une chaudière à combustion.

L'inventeur a déterminé expérimentalement qu'un raccordement avant (respectivement après) le débit mètre permet une réduction de 70% (respectivement 90%) des émissions de CO2 du dispositif à combustion. Le dispositif selon l'invention permet aussi de réduire la consommation de carburant du dispositif à combustion.

Dans un mode de réalisation de l'invention, le moyen de communication fluidique comprend un dispositif de filtration. Ce dispositif permet d'éviter que de l'eau ne soit injectée dans le dispositif à combustion.

Dans un mode de réalisation de l'invention, le moyen de communication fluidique comprend un dispositif antiretour. Ce dispositif permet d'éviter tout retour de flamme.

L'invention propose en outre un véhicule comprenant un système selon l'invention. Le dispositif est installé dans le véhicule de façon à ce que la deuxième direction soit une direction verticale.

L'invention propose en outre une méthode pour générer de l'hydrogène selon la revendication 14.

Les avantages mentionnés pour le dispositif s'appliquent mutatis mutandis à la méthode.

### Brève description des figures

D'autres caractéristiques et avantages de l'invention apparaîtront a la lecture de la description détaillée qui suit pour la compréhension de laquelle on se reportera aux figures annexées parmi lesquelles :
- la figure 1 est une coupe latérale d'un dispositif d'un système selon un premier mode de réalisation qui ne fait pas partie de l'invention;
- la figure 2 est une coupe latérale d'un dispositif d'un système selon un deuxième mode de réalisation qui ne fait pas partie de de l'invention;
- la figure 3 est une coupe latérale d'un dispositif d'un système selon un troisième mode de réalisation qui ne fait pas partie de de l'invention;
- la figure 4a est une vue de face d'une plaque 20 utilisée dans un mode de réalisation du dispositif qui ne fait pas partie de l'invention ;
- la figure 4b est une vue de face d'une plaque 20 utilisée dans un mode de réalisation du dispositif qui ne fait pas partie de l'invention;
- la figure 5a est une vue de face d'une plaque 20 utilisée dans un mode de réalisation du dispositif qui ne fait pas partie de l'invention;
- la figure 5b est une vue de face d'une plaque 20 utilisée dans un mode de réalisation du dispositif qui ne fait pas partie de l'invention ; et
- la figure 6 est un schéma illustrant un mode de réalisation d'un système qui ne fait pas partie de l'invention.

### Modes de réalisation

Les dessins ou figures décrits ne sont que schématiques et ne sont pas limitants.

Sur les figures, les éléments identiques ou analogues peuvent porter les mêmes références.

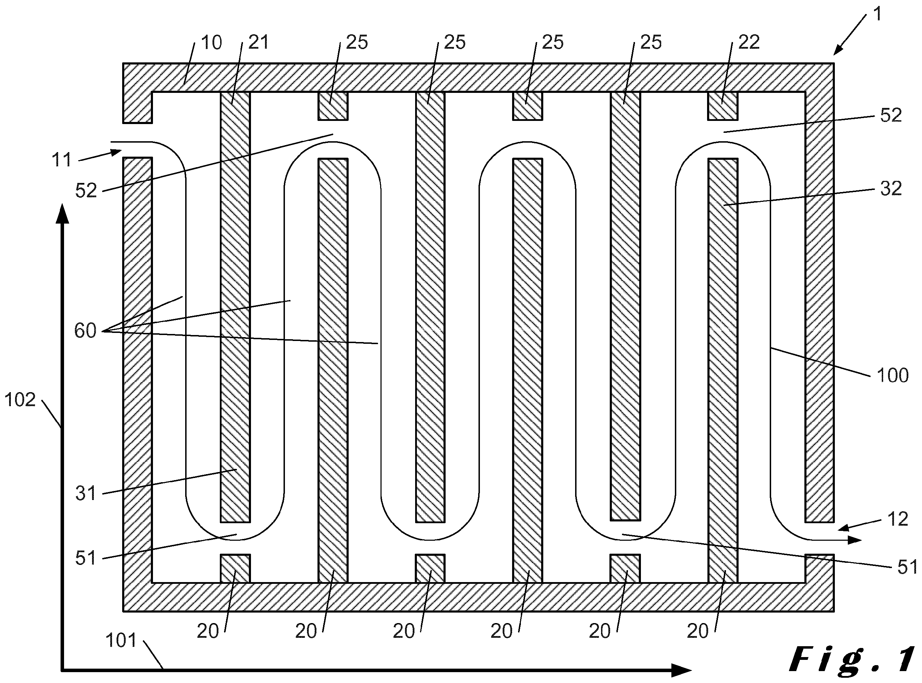

La figure 1 illustre une vue en coupe, dans un plan vertical, d'un dispositif 1 pour générer de l'hydrogène.

La figure 1 permet de visualiser une possibilité préférée pour une première direction 101 et une deuxième direction 102, perpendiculaire à la première direction 101. La première direction 101 correspond au mouvement global d'un fluide dans le dispositif 1. Elle est de préférence horizontale. La deuxième direction 102 est de préférence verticale.

Le dispositif 1 comprend une enceinte 10, une entrée 11 permettant de faire entrer du fluide dans l'enceinte 10 et une sortie permettant de faire sortir le fluide de l'enceinte 10. Le dispositif 1 est agencé pour conduire le fluide entre l'entrée 11 et la sortie 12.

Le dispositif 1 comprend des plaques 20, à l'intérieur de l'enceinte 10. Elles sont de préférence verticales. Elles sont de préférence fixées à l'enceinte 10. Les plaques 20 sont de préférence perpendiculaires à la première direction 101 et espacées selon cette direction. Les plaques 20 se succèdent selon la première direction 101 dans l'ordre suivant :
- une première plaque d'extrémité 21,
- une pluralité de plaques intermédiaires 25, et
- une deuxième plaque d'extrémité 22.

Les plaques 20 divisent au moins une partie de l'enceinte 10 en compartiments 60. Les compartiments 60 communiquent fluidiquement entre eux uniquement via des ouvertures inferieures 51 et des ouvertures supérieures 52. Les ouvertures inférieures 51 et supérieures 52 permettent un trajet fluidique 100 entre l'entrée 11 et la sortie 12.

Les ouvertures inférieures 51 sont décalées spatialement selon la deuxième direction 102 par rapport aux ouvertures supérieures 52. Ainsi, les ouvertures supérieures 52 sont plus hautes que les ouvertures inférieures 51.

Le fluide se déplaçant dans le dispositif 1 passe d'un compartiment 60 à l'autre en passant en alternance par au moins une ouverture inférieure 51 et au moins une ouverture supérieure 52. En d'autres termes, le trajet fluidique 100 à l'intérieur du dispositif 1 a une forme montante et descendante, par exemple une forme de sinusoïde ou une forme de serpentin. Un passage fluidique entre deux compartiments consécutifs n'est possible que par une ou plusieurs ouverture(s) inférieure(s) ou par une ou plusieurs ouverture(s) supérieure(s), mais pas à la fois par une ou plusieurs ouverture(s) inférieure(s) et par une ou plusieurs ouverture(s) supérieure(s).

Durant son trajet fluidique 100 dans le dispositif 1, le fluide subit une réaction d'électrolyse qui fait qu'il se transforme au moins partiellement chimiquement et qu'il change au moins partiellement de phase. A l'entrée 11, le fluide est essentiellement une solution liquide aqueuse. A la sortie 12, le fluide comprend de l'hydrogène et de l'oxygène gazeux. Entre l'entrée 11 et la sortie 12, le fluide comprend un mélange de liquide et de gaz.

La sortie 12 pourrait comprendre une pluralité de passages, par exemple un premier passage agencé pour faire sortir la partie liquide du fluide et un deuxième passage agence pour faire sortir la partie gazeuse du fluide.

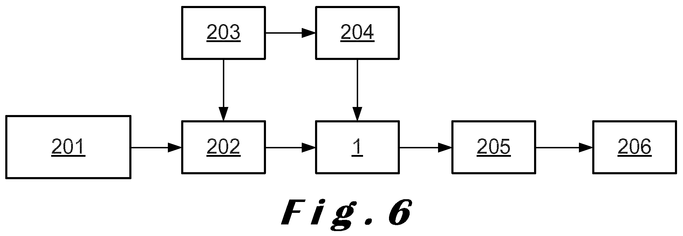

Les plaques 20 sont capables de conduire de l'électricité. Au moins une des plaques est agencée pour former une anode 31 et au moins une des plaques est agencée pour former une cathode 32. L'anode 31 et la cathode 32 sont agencées pour être connectée à un dispositif 5 d'alimentation en électricité 203 (Figure 6).

La première plaque d'extrémité 21 forme l'anode et la deuxième plaque d'extrémité 22 forme la cathode. Au moins certaines des plaques intermédiaires 25 sont agencées pour être à un potentiel électrique flottant. Ainsi, le potentiel électrique des plaques intermédiaires 25 est déterminé par les conditions ambiantes, et notamment les potentiels de la première plaque d'extrémité 21 et la deuxième plaque d'extrémité 22.

De préférence, toutes les plaques 20 sont dans un même matériau. En particulier, deux plaques consécutives sont de préférence dans un même matériau. Ce matériau est préférentiellement un métal, par exemple de l'acier inoxydable.

De préférence, les plaques 20 sont séparées l'une de l'autre par des joints ou des entretoises (non-représentés) situés à proximité des connections des plaques 20 à l'enceinte 10.

Un joint (non-illustré) peut aussi être présent à la jonction entre chaque plaque et l'enceinte, afin d'assurer l'étanchéité de cette jonction.

Le figure 1 illustre un mode de réalisation du dispositif 1 dans lequel les ouvertures inférieures 51 et les ouvertures supérieures 52 comprennent des trous traversant les plaques intermédiaire 25, au moins un trou traversant la première plaque d'extrémité 21 et au moins un trou traversant la deuxième plaque d'extrémité 22.

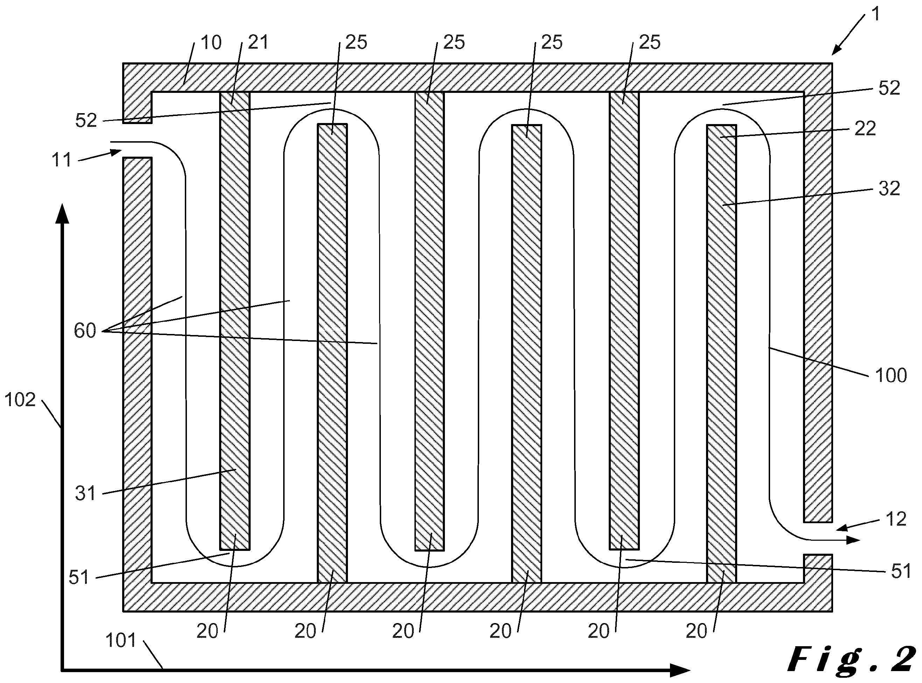

Le figure 2 illustre un mode de réalisation du dispositif 1 dans lequel les ouvertures inférieures 51 et les ouvertures supérieures 52 comprennent des trous entre les plaques 20 et l'enceinte 10.

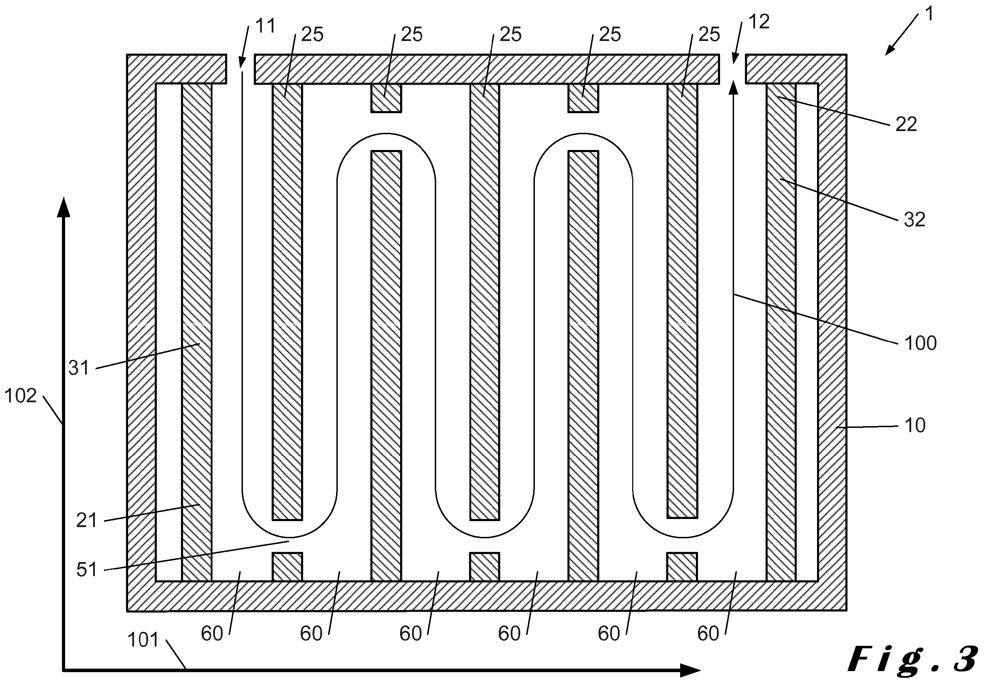

Le figure 3 illustre un mode de réalisation du dispositif 1 dans lequel les ouvertures inférieures 51 et les ouvertures supérieures 52 comprennent des trous traversant les plaques intermédiaires 25, et dans lequel la première plaque d'extrémité 21 et la deuxième plaque d'extrémité 22 sont hermétiques.

Comme illustré aux figures 1 à 3, il est préférable que l'entrée 11 soit décalée selon la deuxième direction 102 par rapport à la première ouverture. Il est en outre préférable que la sortie 12 soit décalée selon la deuxième direction 102 par rapport à la dernière ouverture.

Selon l'invention, la pluralité de plaques comprend, dans cet ordre :
- la première plaque d'extrémité 21 qui forme une première anode 31,
- des plaques intermédiaires 25 à un potentiel électrique flottant,
- une plaque intermédiaire 25 qui forme une première cathode 32,
- des plaques intermédiaires 25 à un potentiel électrique flottant,
- une plaque intermédiaire 25 qui forme une deuxième anode 31,
- des plaques intermédiaires 25 à un potentiel électrique flottant,
- potentiellement d'autres plaques, et
- la deuxième plaque d'extrémité 22 qui forme une ixième cathode 32.

Dans le cadre de la présente invention, les positions respectives de l'anode et de la cathode peuvent être inversées.

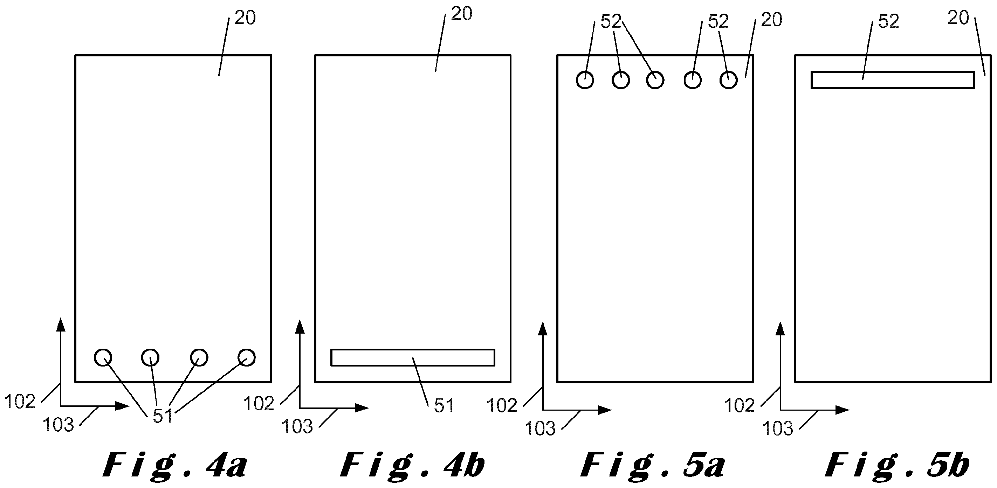

La figure 4a est une vue de face d'une plaque 20 comprenant des trous circulaires qui ferment des ouvertures inférieures 51.

La figure 4b est une vue de face d'une plaque 20 comprenant une fente qui forme une ouverture inférieure 51. La plaque 20 ne comprend qu'une seule fente. La fente s'étend selon une troisième direction 103 qui est perpendiculaire à la première 101 et à la deuxième 102 direction.

La figure 5a est une vue de face d'une plaque 20 comprenant des trous circulaires qui ferment des ouvertures supérieures 52.

La figure 5b est une vue de face d'une plaque 20 comprenant une fente qui forme une ouverture supérieure 52. La plaque 20 ne comprend qu'une seule fente. La fente s'étend selon la troisième direction 103.

La figure 6 est un schéma illustrant un mode de réalisation d'un système comprenant un ou plusieurs dispositif(s) 1 pour générer de l'hydrogène , un réservoir de fluide 201 et une pompe 202 faisant circuler le fluide depuis le réservoir 201 vers le dispositif 1, dans le dispositif 1 et en aval du dispositif 1. Le système comprend en outre un dispositif 203 d'alimentation en électricité alimentant la pompe 202 et le dispositif 1 pour générer de l'hydrogène. De préférence, l'alimentation du dispositif 1 est contrôlée par un contrôleur 204 qui permet de réguler la production d'hydrogène, par exemple le courant entre les électrodes et/ou le potentiel aux électrodes. Le dispositif 203 d'alimentation en électricité est connecté à l'anode 31 et à la cathode 32 du dispositif 1.

Le système comprend en outre un dispositif à combustion 206 dont une entrée est connectée par un moyen de communication fluidique à la sortie 12 du dispositif 1 pour générer de l'hydrogène.

Ce moyen de communication fluidique comprend de préférence un ou plusieurs dispositif(s) 205 de filtration et/ou un ou plusieurs dispositif(s) 205 antiretour. La filtration permet d'enlever l'eau restant dans le fluide. Pour réaliser cette filtration, il est possible que le fluide repasse par le réservoir 201 afin que l'eau restant dans le fluide soit retenue dans le 25 réservoir 201. Le dispositif de filtration peut comprendre au moins un dispositif à bulles (bubbler en anglais). Le dispositif anti-retour empêche tout mouvement de fluide en arrière et/ou tout retour de flamme. Il comprend par exemple une vanne.

Le fluide, à l'entrée du dispositif a combustion 206 ne comprend de préférence que de l'hydrogène et/ou de l'oxygène. Pour entrer dans le dispositif à combustion 206, le fluide passe de préférence par un injecteur, un filtre à air ou un collecteur d'admission via des injecteurs complémentaires.

En outre, le système peut comprendre des ventilateurs (non-illustrés) agencés pour refroidir le dispositif 1.

En outre, le système peut comprendre une jauge de contrôle du niveau de fluide dans le réservoir 201. Grace à cela, dans le cas d'un véhicule, le tableau de bord peut afficher le niveau de fluide dans le réservoir 201.

En d'autres termes, l'invention se rapporte à un générateur d'hydrogène par électrolyse, utilisable notamment dans l'industrie automobile, l'industrie maritime, l'industrie ferroviaire sans limitation. Dans le générateur selon l'invention, le fluide est forcé de suivre un trajet avec des mouvements ascendants et descendants afin d'éviter toute ségrégation entre l'eau liquide et l'hydrogène et l'oxygène créés par l'électrolyse.

## Revendications

1. Système comprenant :
- au moins un dispositif (1) pour diminuer la consommation de carburant d'un véhicule, ledit au moins un dispositif (1) comprenant :
• une enceinte (10),
• une entrée (11) pour faire entrer un fluide dans le dispositif (1),
• une sortie (12) pour faire sortir le fluide du dispositif (1),
• une pluralité de plaques (20) conductrices disposées dans l'enceinte (10) de façon à délimiter des compartiments (60),
la pluralité de plaques (20) comprenant, selon une première direction (101), une première plaque d'extrémité (21), des plaques intermédiaires (25) et une deuxième plaque d'extrémité (22),
la pluralité de plaques (20) comprenant, dans cet ordre :
- la première plaque d'extrémité (21) qui forme une première anode (31),
- des plaques intermédiaires (25) à un potentiel électrique flottant,
- une plaque intermédiaire (25) qui forme une première cathode (32),
- des plaques intermédiaires (25) à un potentiel électrique flottant,
- une plaque intermédiaire (25) qui forme une deuxième anode (31),
- des plaques intermédiaires (25) à un potentiel électrique flottant,
- la deuxième plaque d'extrémité (22) qui forme une deuxième cathode (32),
l'au moins un dispositif (1) comprenant en alternance des ouvertures inférieures (51) et des ouvertures supérieures (52) agencées pour permettre un trajet fluidique (100) entre l'entrée (11) et la sortie (12), un passage fluidique entre deux compartiments (60) consécutifs n'étant possible que par une ou plusieurs ouverture(s) inférieure(s) (51) ou par une ou plusieurs ouverture(s) supérieure(s) (52), les ouvertures inférieures (51) étant décalées des ouvertures supérieures (52) selon une deuxième direction (102) perpendiculaire à la première direction (101 ), de sorte que, lorsque la deuxième direction (102) est une direction verticale, dans un compartiment (60) le fluide se déplace vers le haut, et dans le compartiment suivant le fluide se déplace vers le bas ;
- une pompe (202) agencée pour faire circuler un fluide entre l'entrée (11) et la sortie (12) ;
- un dispositif d'alimentation en électricité connecté aux anodes (31) et aux cathodes (32) ;
- un dispositif à combustion (206) ; et
- un moyen de communication fluidique connectant la sortie (12) à une entrée du dispositif à combustion (206).

2. Système selon la revendication 1, dans lequel les ouvertures inférieures (51) et les ouvertures supérieures (52) comprennent des trous traversant les plaques intermédiaires (25).

3. Système selon l'une quelconque des revendications précédentes, dans lequel les ouvertures inférieures (51) et les ouvertures supérieures (52) comprennent un trou traversant la première plaque d'extrémité (21) et un trou traversant la deuxième plaque d'extrémité (22).

4. Système selon l'une quelconque des revendications précédentes, dans lequel les ouvertures inférieures (51) et les ouvertures supérieures (52) sont des fentes.

5. Système selon la revendication précédente, dans lequel chacune des plaques ne comprend qu'une seule fente.

6. Système selon la revendication 4 ou 5, dans lequel les fentes font entre 70% et 95% de la largeur d'une plaque.

7. Système selon l'une quelconque des revendications précédentes, dans lequel deux plaques (20) consécutives sont maintenues écartées par un joint ou une entretoise.

8. Système selon l'une quelconque des revendications précédentes, dans lequel toutes les plaques de la pluralité de plaques (20) sont de forme rectangulaires et allongées selon la deuxième direction (102).

9. Système selon l'une quelconque des revendications précédentes, dans lequel toutes les plaques de la pluralité de plaques (20) sont dans un même matériau.

10. Système selon la revendication précédente, dans lequel le moyen de communication fluidique comprend un dispositif de filtration.

11. Système selon la revendication précédente, dans lequel le moyen de communication fluidique comprend un dispositif antiretour.

12. Véhicule, par exemple voiture, comprenant un système selon l'une quelconque des revendications précédentes.

13. Véhicule, par exemple voiture, comprenant un système selon l'une quelconque des revendications 1 à 11 dans lequel la deuxième direction (102) est verticale.

14. Méthode pour générer de l'hydrogène comprenant les étapes de :
(a) fournir un système selon l'une quelconque des revendications 1 à 11 ou un véhicule selon la revendication 12,
(b) alimenter en fluide l'entrée (11) du au moins un dispositif (1) et faire circuler le fluide entre l'entrée (11) et la sortie (12) du au moins un dispositif (1), et
(c) appliquer une différence de potentiel entre la première anode (31) et la première cathode (32), et entre la deuxième anode (31) et la deuxième cathode (32).

## Patentansprüche

1. System, das Folgendes umfasst:
- mindestens eine Vorrichtung (1) zur Verringerung des Kraftstoffverbrauchs eines Fahrzeugs, wobei mindestens eine Einrichtung (1) umfasst:
• ein Gehäuse (10),
• einen Einlass (11) zum Einleiten einer Flüssigkeit in die Vorrichtung (1),
• einen Auslass (12) zum Austreten der Flüssigkeit aus der Vorrichtung (1),
• eine Vielzahl von leitfähigen Platten (20), die in dem Gehäuse (10) so angeordnet sind, dass sie Fächer (60) abgrenzen,
Die Vielzahl der Platten (20), die in einer ersten Richtung (101) eine erste Endplatte (21), Zwischenplatten (25) und eine zweite Endplatte (22) umfassen,
Die Vielzahl der Platten (20), die in dieser Reihenfolge umfassen:
- die erste Endplatte (21) bildet eine erste Anode (31),
- Zwischenplatten (25) mit potentialfreiem elektrischem Potential,
- eine Zwischenplatte (25) bildet eine erste Kathode (32),
- Zwischenplatten (25) mit potentialfreiem elektrischem Potential,
- eine Zwischenplatte (25) bildet eine zweite Anode (31),
- Zwischenplatten (25) mit potentialfreiem elektrischem Potential,
- die zweite Endplatte (22) bildet eine zweite Kathode (32),
mindestens eine Vorrichtung (1) mit abwechselnd unteren Öffnungen (51) und oberen Öffnungen (52), die so angeordnet sind, dass sie einen fluidischen Weg (100) zwischen dem Einlass (11) und dem Auslass (12) ermöglichen, wobei ein fluidischer Durchgang zwischen zwei aufeinanderfolgenden Kompartimenten (60) nur durch eine oder mehrere untere(n) Öffnung(en) (51) oder durch eine oder mehrere obere(n) Öffnung(en) (52) möglich ist; wobei die unteren Öffnungen (51) von den oberen Öffnungen (52) in einer zweiten Richtung (102) senkrecht zur ersten Richtung (101) versetzt sind, so dass, wo die zweite Richtung (102) eine vertikale Richtung ist, sich das Fluid in einem Fach (60) nach oben bewegt und in dem nächsten Fach das Fluid nach unten bewegt;
- eine Pumpe (202), die so angeordnet ist, dass sie eine Flüssigkeit zwischen dem Einlass (11) und dem Auslass (12) zirkulieren lässt;
- eine Stromversorgungseinrichtung, die mit den Anoden (31) und Kathoden (32) verbunden ist;
- eine Verbrennungsvorrichtung (206); und
- ein fluidisches Kommunikationsmittel, das den Auslass (12) mit einem Eingang der Verbrennungseinrichtung (206) verbindet.

2. System nach Anspruch 1, wobei die unteren Öffnungen (51) und die oberen Öffnungen (52) Löcher durch die Zwischenplatten (25) aufweisen.

3. System nach einem der vorhergehenden Ansprüche, wobei die unteren Öffnungen (51) und die oberen Öffnungen (52) ein Loch durch die erste Endplatte (21) und ein Loch durch die zweite Endplatte (22) umfassen.

4. System nach einem der vorhergehenden Ansprüche, wobei die unteren Öffnungen (51) und die oberen Öffnungen (52) Schlitze sind.

5. System nach dem vorhergehenden Anspruch, wobei jede der Platten nur einen Schlitz umfasst.

6. System nach Anspruch 4 oder 5, wobei die Schlitze zwischen 70 % und 95 % der Breite einer Platte liegen.

7. System nach einem der vorhergehenden Ansprüche, wobei zwei aufeinanderfolgende Platten (20) durch ein Gelenk oder einen Abstandshalter voneinander gehalten werden.

8. System nach einem der vorhergehenden Ansprüche, wobei alle Platten der Mehrzahl von Platten (20) rechteckig geformt und in der zweiten Richtung (102) länglich sind.

9. System nach einem der vorhergehenden Ansprüche, wobei alle Platten der Mehrzahl von Platten (20) aus demselben Material bestehen.

10. System nach dem vorhergehenden Anspruch, wobei das fluidische Kommunikationsmittel eine Filtrationsvorrichtung umfasst.

11. System nach dem vorhergehenden Anspruch, wobei das fluidische Kommunikationsmittel eine Rückschlagsicherung umfasst.

12. Fahrzeug, z. B. ein Pkw, das ein System nach einem der vorhergehenden Ansprüche umfasst.

13. Fahrzeug, z. B. ein Pkw, mit einem System nach einem der Ansprüche 1 bis 11, wobei die zweite Richtung (102) vertikal verläuft.

14. Verfahren zur Erzeugung von Wasserstoff, umfassend die Schritte:
a) Bereitstellen eines Systems nach einem der Ansprüche 1 bis 11 oder eines Fahrzeugs nach Anspruch 12,
b) Versorgen des Einlasses (11) mit Flüssigkeit zum Einlass (11) mindestens einer Vorrichtung (1) und Zirkulieren der Flüssigkeit zwischen dem Einlass (11) und dem Auslass (12) mindestens einer Vorrichtung (1), und
(c) Anlegen einer Potentialdifferenz zwischen der ersten Anode (31) und der ersten Kathode (32) sowie zwischen der zweiten Anode (31) und der zweiten Kathode (32)

## Claims

1. System comprising:
- at least one device (1) for reducing the fuel consumption of a vehicle, said at least one device (1) comprising:
• an enclosure (10),
• an inlet (11) for bringing a fluid into the device (1),
• an outlet (12) for removing the fluid from the device (1),
• a plurality of conductive plates (20) arranged in the enclosure (10) so as to delimit compartments (60),
the plurality of plates (20) comprising, in a first direction (101), a first end plate (21), intermediate plates (25) and a second end plate (22),
the plurality of plates (20) comprising, in this order:
- the first end plate (21) which forms a first anode (31),
- intermediate plates (25) at a floating electric potential,
- an intermediate plate (25) which forms a first cathode (32),
- intermediate plates (25) at a floating electric potential,
- an intermediate plate (25) which forms a second anode (31),
- intermediate plates (25) at a floating electric potential,
- the second end plate (22) which forms a second cathode (32),
the at least one device (1) comprising alternating lower openings (51) and upper openings (52) arranged to allow a fluid path (100) between the inlet (11) and the outlet (12), a fluid passage between two consecutive compartments (60) being possible only
by one or more lower opening(s) (51) or by one or more upper opening(s) (52), the lower openings (51) being offset from the upper openings (52) in a second direction (102) perpendicular to the first direction (101), so that, when the second direction (102) is a vertical direction,
in one compartment (60) the fluid moves upwards, and in the following compartment the fluid moves downwards;
- a pump (202) arranged to circulate a fluid between the inlet (11) and the outlet (12);
- an electricity supply device connected to the anodes (31) and the cathodes (32);
- a combustion device (206); and
- a fluid communication means connecting the outlet (12) to an inlet of the combustion device (206) .

2. System according to claim 1, wherein the lower openings (51) and the upper openings (52) comprise holes passing through the intermediate plates (25).

3. A system according to any preceding claim, wherein the lower openings (51) and the upper openings (52) comprise a hole through the first end plate (21) and a hole through the second end plate (22).

4. System according to any one of the preceding claims, wherein the lower openings (51) and the upper openings (52) are slots.

5. System according to the preceding claim, in which each of the plates comprises only one slot.

6. A system according to claim 4 or 5, wherein the slots are between 70% and 95% of the width of a plate.

7. System according to any one of the preceding claims, in which two consecutive plates (20) are kept apart by a seal or a spacer.

8. System according to any one of the preceding claims, wherein all of the plates of the plurality of plates (20) are rectangular in shape and elongated in the second direction (102).

9. A system according to any preceding claim, wherein all of the plurality of plates (20) are made of the same material.

10. System according to the preceding claim, in which the fluid communication means comprises a filtration device.

11. System according to the preceding claim, in which the fluid communication means comprises a non-return device.

12. Vehicle, for example car, comprising a system according to any one of the preceding claims.

13. Vehicle, for example car, comprising a system according to any one of claims 1 to 11 in which the second direction (102) is vertical.

14. A method for generating hydrogen comprising the steps of:
(a) providing a system according to any one of claims 1 to 11 or a vehicle according to claim 12,
(b) supplying fluid to the inlet (11) of the at least one device (1) and circulating the fluid between the inlet (11) and the outlet (12) of the at least one device (1), and
(c) applying a potential difference between the first anode (31) and the first cathode (32), and between the second anode (31) and the second cathode (32).
